(19) **Europäisches Patentamt / European Patent Office / Office européen des brevets**

(11) **EP 4 206 957 A1**

(12) **EUROPEAN PATENT APPLICATION**
published in accordance with Art. 153(4) EPC

(43) Date of publication:
**05.07.2023 Bulletin 2023/27**

(21) Application number: **21874284.9**

(22) Date of filing: **18.09.2021**

(51) International Patent Classification (IPC):
**G06F 17/16** (2006.01)

(86) International application number:
**PCT/CN2021/119274**

(87) International publication number:
**WO 2022/068623 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 CN 202011063706**

(71) Applicant: **Huawei Technologies Co., Ltd.
Shenzhen, Guangdong 518129 (CN)**

(72) Inventors:
• **REN, Xiaozhe**
  **Shenzhen, Guangdong 518129 (CN)**
• **YIN, Yichun**
  **Shenzhen, Guangdong 518129 (CN)**
• **JIANG, Xin**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **MODEL TRAINING METHOD AND RELATED DEVICE**

(57) This application relates to the field of artificial intelligence, and provides a model training method. The method includes: obtaining a to-be-trained first neural network model, where the first neural network model includes a first operator, and the first operator is used to perform a product operation on input data and a target weight matrix (301); replacing the first operator in the first neural network model with a second operator, to obtain a second neural network model, where the second operator is used to perform a product operation on input data and a plurality of sub-weight matrices, and the plurality of sub-weight matrices are obtained by performing matrix factorization on the target weight matrix (302); and performing model training on the second neural network model to obtain a target neural network model (303). In this method, the target weight matrix is split into a product of the plurality of sub-weight matrices. Therefore, a training device requires a shorter time period to perform the product operation on the input data and the plurality of sub-weight matrices, thereby reducing a model training time period.

Obtain a to-be-trained first neural network model, where the first neural network model includes a first operator, and the first operator is used to perform a product operation on input data and a target weight matrix — 301

Replace the first operator in the first neural network model with a second operator, to obtain a second neural network model, where the second operator is used to perform a product operation on the input data and a plurality of sub-weight matrices, and the plurality of sub-weight matrices are obtained by performing matrix factorization on the target weight matrix — 302

Perform model training on the second neural network model to obtain a target neural network model — 303

FIG. 3

## Description

This application claims priority to Chinese Patent Application No. 202011063706.4, filed with the China National Intellectual Property Administration on September 30, 2020 and entitled "MODEL TRAINING METHOD AND RELATED DEVICE", which is incorporated herein by reference in its entirety.

## TECHNICAL FIELD

This application relates to the field of artificial intelligence, and in particular, to a model training method and a related device.

## BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions.

A deep learning framework is a computer software system that executes a deep learning network on a specific hardware computing platform, for example, a central processing unit (central processing unit, CPU), a graphics processing unit (graphics processing unit, GPU), or a neural network processing unit (neural network processing unit, NPU). Common deep learning frameworks include TensorFlow, PyTorch, Caffe, and MindSpore. A deep learning framework usually provides a series of software interfaces for users. These software interfaces are defined deep learning network computing units, which are referred to as operators. Users may combine operators to construct a deep learning network, such as a convolutional neural network (convolutional neural network, CNN), a transformer (Transformer), and a recurrent neural network (recurrent neural network, RNN).

In the deep learning technology, a type of operator is referred to as a fully connected layer or a linear layer, and performs the following multiply-add operation: $F(x) = XW + b$, where W is a weight matrix, W is a parameter that needs to be learned, X is an input at the linear layer, and b is a bias value that needs to be learned. This type of operator usually occupies a considerable operation amount in a deep learning network, and is a key to determine whether a deep learning framework can accelerate an operation.

To improve an operation speed of the linear layer, a script may be manually modified to seek for a faster linear layer configuration, for example, a smaller input X, and smaller learnable parameters W and b; or a faster hardware platform is developed. However, how to improve performance when a user modifies a script to a minimum extent without upgrading a hardware resource is a technical problem that needs to be resolved.

## SUMMARY

According to a first aspect, this application provides a model training method.

The method includes: obtaining a to-be-trained first neural network model. The first neural network model includes a first operator. The first operator is used to perform a product operation on input data and a target weight matrix. A user may input a script program written in advance. The script program may express a model architecture of the to-be-trained first neural network model, a size of a to-be-trained parameter in the first neural network model, and the like. The script program may include code related to the first operator. The code may specify that an operator type of the first operator is a linear layer, and specify a size of the target weight matrix in the first operator. When training the first neural network model, a training device may call, based on the code related to the first operator, an API related to the linear layer to execute the first operator. The first operator may be the linear layer. A linear layer of a framework is an encapsulation of a multiply-add operation, and is usually in a class form. The first operator may be but not limited to Linear or Dense. A mathematical expression of the first operator is usually a multiply-add operation: $F(x) = XW + b$, where W is a weight matrix, W is a parameter that needs to be learned, X is an input at the linear layer, and b is a bias value that needs to be learned. If the mathematical expression of the first operator is $F(x) = XW + b$, W is the target weight matrix, X is input data at the linear layer, and b is a bias value. It should be understood that there may be or may not be the bias value in some scenarios. The first operator is used to perform the product operation on the input data and the target weight matrix. Optionally, the first operator is used to perform the product operation on the input data and the target weight matrix, to obtain a first operation result and perform an addition operation on the first operation result and the bias value.

The method includes: replacing the first operator in the first neural network model with a second operator, to obtain a second neural network model. The second operator is used to perform a product operation on the input data and a plurality of sub-weight matrices. The plurality of sub-weight matrices are obtained by performing matrix factorization on the target weight matrix. The to-be-trained first neural network model may not be trained according to a specification specified by the user for the first neural network model. The first operator in the first neural network model is first analyzed to determine whether there is a better expression to replace the target weight matrix included in the first operator. The better expression indicates that a first neural network model for which the first operator is replaced has a faster training speed during training (that is, a shorter time period is consumed for processing a same amount of training data). If training determines that there is a better expression to replace the target weight matrix included in the first operator, the first operator in the first neural network model may be replaced with the second operator, to obtain the second neural network model. A difference between the second operator and the first operator lies in that the second operator is obtained by replacing the target weight matrix in the first operator with a product of the plurality of sub-weight matrices. The plurality of sub-weight matrices are obtained by performing matrix factorization on the target weight matrix.

The method includes: performing model training on the second neural network model to obtain a target neural network model.

In this embodiment, the target weight matrix is split into a product of the plurality of sub-weight matrices. Therefore, a training device requires a shorter time period to perform the product operation on the input data and the plurality of sub-weight matrices, thereby reducing a model training time period.

In a possible implementation, when a same amount of training data is processed, a time period required by the first neural network model is longer than a time period required by the second neural network model. In other words, when the training data is processed, a time period of each iteration of the second neural network model is shorter. In other words, in a same time period, the second neural network model may process a larger amount of data.

In this embodiment of this application, when the same amount of training data is processed, the time period required by the first neural network model is longer than the time period required by the second neural network model. In other words, when model training is performed on the first neural network model, a time period required by the first neural network model to process a preset quantity of training data is longer than a time period required by the second neural network model to process the preset amount of training data in a process of performing model training on the second neural network model. For a large target weight matrix, the training device requires a long time period to perform the product operation on the input data and the target weight matrix. In this embodiment of this application, the target weight matrix is split into the product of the plurality of sub-weight matrices. Therefore, the training device requires a shorter time period to perform the product operation on the input data and the plurality of sub-weight matrices.

In a possible implementation, the plurality of sub-weight matrices include a first sub-weight matrix and a second sub-weight matrix. In a process of performing the product operation on the input data and the plurality of sub-weight matrices, the first sub-weight matrix and the second sub-weight matrix are any two matrices that are of the plurality of sub-weight matrices and that are multiplied by each other. A size of a column in the first sub-weight matrix is the same as a size of a row in the second sub-weight matrix.

In this embodiment of this application, matrix factorization splits a matrix into a product of a plurality of matrices. Specifically, the plurality of sub-weight matrices include a matrix 1, a matrix 2, ..., a matrix N-1, and a matrix N. The second operator is used to perform the following operation: M × matrix 1 × matrix 2 × ... × matrix N-1 × matrix N, where M represents the input data, and × represents multiplication. A size of a row in the target weight matrix is the same as a size of a row in the matrix 1, and a size of a column in the target weight matrix is the same as a size of a column in the matrix N. The plurality of sub-weight matrices include a first sub-weight matrix and a second sub-weight matrix. In a process of performing the product operation on the input data and the plurality of sub-weight matrices, the first sub-weight matrix and the second sub-weight matrix are any two matrices that are of the plurality of sub-weight matrices and that are multiplied by each other. A size of a column in the first sub-weight matrix is the same as a size of a row in the second sub-weight matrix. For example, the first sub-weight matrix is the matrix 1, and the second sub-weight matrix is the matrix 2. In this case, a size of a column of the matrix 1 is the same as a size of a row of the matrix 2. For example, the first sub-weight matrix is the matrix N-1, and the second sub-weight matrix is the matrix N. In this case, a size of a column of the matrix N-1 is the same as a size of a row of the matrix N.

In a possible implementation, the plurality of sub-weight matrices include a matrix 1, a matrix 2, ..., a matrix N-1, and a matrix N. The second operator is used to perform the following operation: M × matrix 1 × matrix 2 × ... × matrix N-1 × matrix N, where M represents the input data, and × represents multiplication.

A size of a row in the target weight matrix is the same as a size of a row in the matrix 1. A size of a column in the target weight matrix is the same as a size of a column in the matrix N.

In a possible implementation, a size of a row in each of the plurality of sub-weight matrices is less than or equal to the size of the row in the target weight matrix. A size of a column in each of the plurality of sub-weight matrices is less than or equal to the size of the column in the target weight matrix.

In a possible implementation, the method further includes:

obtaining a target matrix splitting size, where the target matrix splitting size indicates a size of a row and/or a size of a column of each of the plurality of sub-weight matrices; and
determining the plurality of sub-weight matrices based on the target matrix splitting size and the target weight matrix.

In a possible implementation, the target matrix splitting size includes a1, a2, ..., $a_{n-1}$, and $a_n$. A size of the target weight matrix is P×Q. Correspondingly, sizes of the plurality of sub-weight matrices are P×a1, a1×a2, ..., a(n-1)×an, and an×Q.

In a possible implementation, the obtaining a target matrix splitting size includes:
obtaining a plurality of candidate matrix splitting sizes.

The determining the plurality of sub-weight matrices based on the target matrix splitting size and the target weight matrix includes:
determining a plurality of groups of candidate sub-weight matrices based on the plurality of candidate matrix splitting sizes and the target weight matrix. Each group of candidate sub-weight matrices is obtained based on one candidate matrix splitting size and the target weight matrix.

The replacing the first operator in the first neural network model with a second operator, to obtain a second neural network model includes:

obtaining a plurality of candidate neural network models based on the plurality of groups of candidate sub-weight matrices, where each candidate neural network model includes a candidate operator corresponding to the first operator, and each candidate operator includes a group of candidate sub-weight matrices; and
training the plurality of candidate neural network models, and select, from the plurality of candidate neural network models and as the second neural network model, a candidate neural network model that meets a preset condition for data processing precision and that requires a shortest time period to process a same amount of training data during training.

In a possible implementation, the size of the target weight matrix is P×Q. Any candidate matrix splitting size of the plurality of candidate matrix splitting sizes includes b1, b2, ..., b(n-1), and bn. A group of candidate sub-weight matrices corresponding to the any candidate matrix splitting size is P×b1, b1×b2, ..., b(n-1)×bn, and bn×Q.

In this embodiment of this application, the training device may select a plurality of groups of candidate matrix splitting sizes, to obtain a plurality of groups of candidate sub-weight matrices, and then obtain a plurality of candidate neural network models based on the plurality of groups of candidate sub-weight matrices. Each candidate neural network model includes a candidate operator corresponding to the first operator. Each candidate operator includes a group of candidate sub-weight matrices. In other words, each candidate neural network model is obtained by replacing the target weight matrix in the first operator with a product of a corresponding group of candidate sub-weight matrices. In this embodiment, a first candidate matrix splitting size is any candidate matrix splitting size of the plurality of candidate matrix splitting sizes. The first candidate matrix splitting size includes b1, b2, ..., b(n-1), and bn. A size of the target weight matrix is P×Q. Correspondingly, a group of candidate sub-weight matrices corresponding to the first candidate matrix splitting size are P×b1, b1×b2, ..., b(n-1)×bn, and bn×Q.

In a possible implementation, the obtaining a target matrix splitting size includes: obtaining a plurality of candidate matrix splitting sizes. The determining the plurality of sub-weight matrices based on the target matrix splitting size and the target weight matrix includes: performing model training on a one-shot one-shot model for the to-be-trained first neural network model, to obtain a target one-shot model, where the target one-shot model includes a first weight matrix corresponding to the target weight matrix, and a size of the first weight matrix is the same as that of the target weight matrix; and determining a plurality of groups of candidate sub-weight matrices based on the plurality of candidate matrix splitting sizes and the first weight matrix, where each group of candidate sub-weight matrices is obtained based on one candidate matrix splitting size and the first weight matrix.

The replacing the first operator in the first neural network model with a second operator, to obtain a second neural network model includes:

obtaining a plurality of candidate neural network models based on the plurality of groups of candidate sub-weight matrices, where each candidate neural network model includes a candidate operator corresponding to the first operator, and each candidate operator includes a group of candidate sub-weight matrices; and
training the plurality of candidate neural network models, and select, from the plurality of candidate neural network models and as the second neural network model, a candidate neural network model that meets a preset condition for data processing precision and that requires a shortest time period to process a same amount of training data during training.

In this embodiment, if each candidate neural network model is trained, because there are a large quantity of candidate neural network models, a longer time period is consumed. In this embodiment, to enable the training device to automatically search for an optimal matrix splitting manner, the training device may train a one-shot model. The one-shot model (one-shot model) may be obtained in a sampling training manner, and a submodel extracted from the one-shot model has approximate effect to that of a separately trained submodel. Each matrix splitting manner corresponds to a sub-model of the one-shot model. Search based on the one-shot model can achieve an objective of training for a plurality of times, thereby greatly reducing a search time period.

In a possible implementation, the first operator is further configured to add a result of performing a product operation on the input data and the target weight matrix to a bias value. The second operator is further configured to add a result of performing a product operation on the input data and a product result of the plurality of sub-weight matrices to the bias value.

In a possible implementation, the method further includes:
sending the target neural network model to a terminal device.

In a possible implementation, the target neural network model includes a trained second operator, the trained second operator is used to perform a product operation on the input data and a plurality of trained sub-weight matrices. The method further includes:

using a product result of the plurality of trained sub-weight matrices as a second weight matrix, to generate a third neural network model, where the third neural network model includes a third operator, and the third operator is used to perform a product operation on the input data and the second weight matrix; and
sending the third neural network model to the terminal device.

Specifically, in this embodiment, a user may select whether to store a weight matrix splitting result. In other words, the user may select whether to use the product result of the plurality of sub-weight matrices as the second weight matrix, to return the third neural network model. If the user selects not to store the weight matrix splitting result, the training device may use the product result of the plurality of trained sub-weight matrices as the second weight matrix, to generate the third neural network model. The third neural network model includes the third operator. The third operator is used to: perform the product operation on the input data and the second weight matrix; and send the third neural network model to the terminal device of the user. If the user selects to store the weight matrix splitting result, the training device may send the target neural network model to the terminal device of the user.

According to a second aspect, this application provides a model training apparatus. The apparatus includes:

an obtaining module, configured to obtain a to-be-trained first neural network model, where the first neural network model includes a first operator, and the first operator is used to perform a product operation on input data and a target weight matrix;
an operator replacing module, configured to replace the first operator in the first neural network model with a second operator, to obtain a second neural network model, where the second operator is used to perform a product operation on input data and a plurality of sub-weight matrices, and the plurality of sub-weight matrices are obtained by performing matrix factorization on the target weight matrix; and
a model training module, configured to perform model training on the second neural network model to obtain a target neural network model.

In a possible implementation, when a same amount of training data is processed, a time period required by the first neural network model is longer than a time period required by the second neural network model.

In a possible implementation, the plurality of sub-weight matrices include a first sub-weight matrix and a second sub-weight matrix. In a process of performing the product operation on the input data and the plurality of sub-weight matrices, the first sub-weight matrix and the second sub-weight matrix are any two matrices that are of the plurality of sub-weight matrices and that are multiplied by each other. A size of a column in the first sub-weight matrix is the same as a size of a row in the second sub-weight matrix.

In a possible implementation, the plurality of sub-weight matrices include a matrix 1, a matrix 2, ..., a matrix N-1, and a matrix N. The second operator is used to perform the following operation: $M \times$ matrix 1 $\times$ matrix 2 $\times ... \times$ matrix N-1 $\times$ matrix N, where M represents the input data, and $\times$ represents multiplication.

A size of a row in the target weight matrix is the same as a size of a row in the matrix 1. A size of a column in the target weight matrix is the same as a size of a column in the matrix N.

In a possible implementation, a size of a row in each of the plurality of sub-weight matrices is less than or equal to the size of the row in the target weight matrix. A size of a column in each of the plurality of sub-weight matrices is less than or equal to the size of the column in the target weight matrix.

In a possible implementation, the obtaining module is configured to:
obtain a target matrix splitting size, where the target matrix splitting size indicates a size of a row and/or a size of a column of each of the plurality of sub-weight matrices; and determine the plurality of sub-weight matrices based on the target matrix splitting size and the target weight matrix.

In a possible implementation, the target matrix splitting size includes a1, a2, ..., a(n-1), and an. A size of the target weight matrix is P×Q. Correspondingly, sizes of the plurality of sub-weight matrices are P×a1, a1×a2, ..., a(n-1)×an, and an×Q.

In a possible implementation, the obtaining module is configured to:

> obtain a plurality of candidate matrix splitting sizes; and
> determine a plurality of groups of candidate sub-weight matrices based on the plurality of candidate matrix splitting sizes and the target weight matrix. Each group of candidate sub-weight matrices is obtained based on one candidate matrix splitting size and the target weight matrix.

The operator replacing module is configured to: obtain a plurality of candidate neural network models based on the plurality of groups of candidate sub-weight matrices, where each candidate neural network model includes a candidate operator corresponding to the first operator, and each candidate operator includes a group of candidate sub-weight matrices; and

train the plurality of candidate neural network models, and select, from the plurality of candidate neural network models and as the second neural network model, a candidate neural network model that meets a preset condition for data processing precision and that requires a shortest time period to process a same amount of training data during training.

In a possible implementation, the size of the target weight matrix is P×Q. Any candidate matrix splitting size of the plurality of candidate matrix splitting sizes includes b1, b2, ..., b(n-1), and bn. A group of candidate sub-weight matrices corresponding to the any candidate matrix splitting size is P×b1, b1×b2, ..., b(n-1)×bn, and bn×Q.

In a possible implementation, the obtaining module is configured to:

> obtain the plurality of candidate matrix splitting sizes;
> perform model training on a one-shot one-shot model for the to-be-trained first neural network model, to obtain a target one-shot model, where the target one-shot model includes a first weight matrix corresponding to the target weight matrix, and a size of the first weight matrix is the same as that of the target weight matrix; and
> determine the plurality of groups of candidate sub-weight matrices based on the plurality of candidate matrix splitting sizes and the first weight matrix. Each group of candidate sub-weight matrices is obtained based on one candidate matrix splitting size and the first weight matrix.

The operator replacing module is configured to obtain the plurality of candidate neural network models based on the plurality of groups of candidate sub-weight matrices, where each candidate neural network model includes a candidate operator corresponding to the first operator, and each candidate operator includes a group of candidate sub-weight matrices; and

train the plurality of candidate neural network models, and select, from the plurality of candidate neural network models and as the second neural network model, the candidate neural network model that meets the preset condition for data processing precision and that requires the shortest time period to process the same amount of training data during training.

In a possible implementation, the first operator is further configured to add a result of performing a product operation on the input data and the target weight matrix to a bias value. The second operator is further configured to add a result of performing a product operation on the input data and a product result of the plurality of sub-weight matrices to the bias value.

In a possible implementation, the apparatus further includes:

a sending module, configured to send the target neural network model to a terminal device.

In a possible implementation, the target neural network model includes a trained second operator, the trained second operator is used to perform a product operation on the input data and a plurality of trained sub-weight matrices. The apparatus further includes:

> a sending module, configured to use a product result of the plurality of trained sub-weight matrices as a second weight matrix, to generate a third neural network model, where the third neural network model includes a third operator, and the third operator is used to perform a product operation on the input data and the second weight matrix; and
> send the third neural network model to the terminal device.

According to a third aspect, an embodiment of this application provides a training device. The training device may include a memory, a processor, and a bus system. The memory is configured to store a program. The processor is configured to execute the program in the memory, to perform the method according to any one of the first aspect and the possible implementations of the first aspect.

According to a fourth aspect, an embodiment of this application provides a computer-readable storage medium. The computer-readable storage medium stores a computer program. When the computer program is run on a computer, the computer is enabled to perform the method according to any one of the first aspect and the possible implementations of the first aspect.

According to a fifth aspect, an embodiment of this application provides a computer program. When the computer program is run on a computer, the computer is enabled to perform the method according to any one of the first aspect and the possible implementations of the first aspect.

According to a sixth aspect, this application provides a chip system. The chip system includes a processor, configured to support an execution device or a training device in implementing functions in the foregoing aspects, for example, sending or processing data in the foregoing methods, or information. In a possible design, the chip system further includes a memory. The memory is configured to store program instructions and data that are necessary for the execution device or the training device. The chip system may include a chip, or may include a chip and another discrete component.

An embodiment of this application provides a model training method, including: obtaining a to-be-trained first neural network model, where the first neural network model includes a first operator, and the first operator is used to perform a product operation on input data and a target weight matrix; replacing the first operator in the first neural network model with a second operator, to obtain a second neural network model, where the second operator is used to perform a product operation on input data and a plurality of sub-weight matrices, and the plurality of sub-weight matrices are obtained by performing matrix factorization on the target weight matrix; and performing model training on the second neural network model to obtain a target neural network model. In the foregoing manner, the target weight matrix is split into a product of the plurality of sub-weight matrices. Therefore, a training device requires a shorter time period to perform the product operation on the input data and the plurality of sub-weight matrices, thereby reducing a model training time period.

## BRIEF DESCRIPTION OF DRAWINGS

FIG. 1 is a schematic diagram of a structure of an artificial intelligence main framework;
FIG. 2 is a data processing system;
FIG. 3 is a schematic diagram of an embodiment of a model training method according to an embodiment of this application;
FIG. 4 is a schematic diagram of another embodiment of a model training method according to an embodiment of this application;
FIG. 5 is a schematic diagram of still another embodiment of a model training method according to an embodiment of this application;
FIG. 6 is a schematic diagram of a computational graph according to an embodiment of this application;
FIG. 7 is a schematic diagram of another computational graph according to an embodiment of this application;
FIG. 8 is a schematic diagram of yet another embodiment of a model training method according to an embodiment of this application;
FIG. 9 is a schematic diagram of a structure of a model training apparatus according to an embodiment of this application;
FIG. 10 is a schematic diagram of a structure of an execution device according to an embodiment of this application;
FIG. 11 is a schematic diagram of a structure of a training device according to an embodiment of this application; and
FIG. 12 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

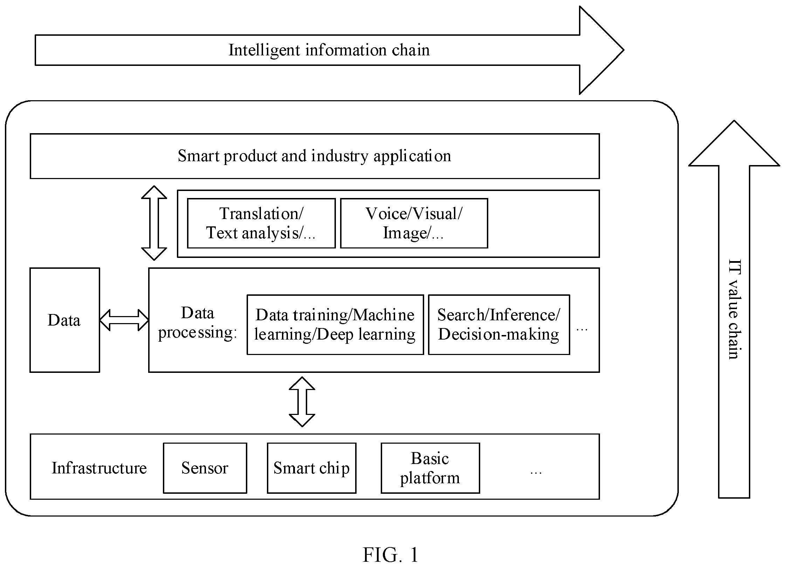

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support through a basic platform. The infrastructure communicates with the outside by using a sensor. A computing capability is provided by a smart chip (a hardware acceleration chip such as a CPU, an NPU, a GPU, an ASIC, or an FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.
Machine learning and deep learning may mean performing symbolic and formalized intelligent information modeling, extraction, preprocessing, training, and the like on data.
Inference is a process in which a human intelligent inference manner is simulated in a computer or an intelligent system, and machine thinking and problem resolving are performed by using formal information according to an inference control policy. A typical function is searching and matching.
Decision-making is a process in which a decision is made after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include a smart terminal, smart transportation, smart health care, autonomous driving, a safe city, and the like.
Because embodiments of this application relate to massive application of a neural network, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^{T}x\right) = f(\sum\nolimits_{s=1}^{n} W_{s}x_{s} + b),$$

where
s = 1, 2, ..., or n, n is a natural number greater than 1, $W_s$ is a weight of xs, b is a bias of the neuron, and f indicates an activation function (activation function) of the neuron, and is used for introducing a non-linear characteristic into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Deep neural network

The deep neural network (Deep Neural Network, DNN) may be understood as a neural network having many hidden layers. There is no special metric standard for "many" herein. A multi-layer neural network and the deep neural network are essentially the same. The DNN is divided based on locations of different layers, and a neural network in the DNN may be divided into three types: an input layer, a hidden layer, and an output layer. Generally, the first layer is the input layer, the last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems to be complex, work of each layer is not complex, and is simply shown as the following linear relationship expression: $\vec{y} = \alpha(W\vec{x} + \vec{b})$, where $\vec{y}$ may be a first operator, a second operator, a third operator, and the like in embodiments, $\vec{x}$ is an input vector, $\vec{y}$ is an output vector, $\vec{b}$ is a bias vector (also referred to as a bias value in embodiments of this application), $W$ is a weight matrix (a coefficient, also referred to as a weight matrix in embodiments of this application), and $\alpha()$ is an activation function. At each layer, the output vector $\vec{y}$ is obtained by performing such a simple operation on the input vector $\vec{x}$. Because there are a plurality of layers in the DNN, there are also a plurality of coefficients $W$ and a plurality of bias vectors $\vec{b}$. How are specific parameters defined in the DNN? First, let's look at a definition of the coefficient $W$. A DNN including three layers is used as an example. A linear coefficient from a fourth neuron at a second layer to a second neuron at a third layer is defined as $W_{24}^{3}$. The superscript 3 indicates a layer at which the coefficient $W$ is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter $W$ at the input layer. In the deep neural network, more hidden layers make the network more capable of describing a complex case in the real world. Theoretically, a model with more parameters indicates higher complexity and a larger "capacity", and indicates that the model can be used to complete a more complex learning task.

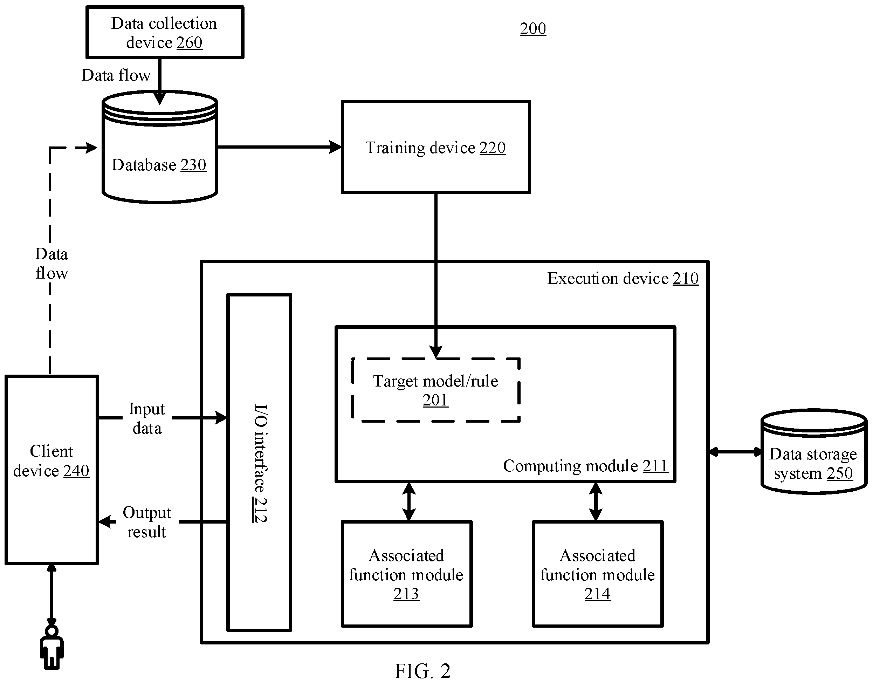

Refer to FIG. 2. An embodiment of the present invention provides a system architecture 200. A data collection device 260 is configured to collect training data and store the training data in a database 230. The training device 220 generates a target model/rule 201 (referred to as a target neural network model in this embodiment of this application) based on the training data maintained in the database 230. The following describes in more detail how the training device 220 obtains the target model/rule 201 based on the training data.

Work at each layer of a deep neural network may be described by using a mathematical expression $\vec{y} = \alpha(W\vec{x} + b)$. From a physical layer, work at each layer of the deep neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operations 1, 2, and 3 are performed by $W\vec{x}$, the operation 4 is performed by $+b$, and the operation 5 is performed by $a()$. The term "space" is used herein for expression because a classified object is not a single thing, but a type of things. Space is a collection of all individuals of such type of things. W is a weight vector, and each value in the vector indicates a weight value of one neuron in the neural network at this layer. The vector $W$ determines space transformation from the input space to the output space described above. In other words, a weight $W$ at each layer controls how to transform space. A purpose of training the deep neural network is to finally obtain a weight matrix (a weight matrix formed by vectors $W$ at a plurality of layers) at all layers of a trained neural network. Therefore, the training process of the neural network is essentially a manner of learning control of space transformation, and more specifically, learning a weight matrix.

Because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the deep neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

The target model/rule obtained by the training device 220 may be applied to different systems or devices. In FIG. 2, an I/O interface 212 is configured for an execution device 210, to exchange data with an external device. A "user" may input data to the I/O interface 212 by using a client device 240.

The execution device 210 may invoke data, code, and the like in a data storage system 250, and may further store, in the data storage system 250, data, instructions, and the like.

The calculation module 211 processes the input data by using the target model/rule 201. Finally, the I/O interface 212 returns a processing result to the client device 240, and provides the processing result to the user.

More deeply, the training device 220 may generate, for different targets, corresponding target models/rules 201 based on different data, to provide a better result for the user.

In a case shown in FIG. 2, the user may manually specify data to be input to the execution device 210, for example, may perform an operation on an interface provided by the I/O interface 212. In another case, the client device 240 may automatically input data to the I/O interface 212 and obtain a result. If the client device 240 needs to obtain permission of the user for automatically inputting the data, the user may set corresponding permission on the client device 240. The user can view, on the client device 240, a result output by the execution device 210. The result may be specifically presented in a specific manner, for example, display, sound, or an action.

It should be noted that, FIG. 2 is merely a schematic diagram of the system architecture according to this embodiment of the present invention. A position relationship between devices, components, modules, and the like shown in the figure does not constitute any limitation. For example, in FIG. 2, the data storage system 250 is an external storage device relative to the execution device 210, and in another case, the data storage system 250 may alternatively be disposed in the execution device 210.

The model training method provided in embodiments of this application may be specifically applied to data processing methods such as data training, machine learning, and deep learning. Symbolized and formalized intelligent information modeling, extraction, preprocessing, training, and the like are performed on training data, to finally obtain a trained target neural network model. In addition, in the data processing method provided in embodiments of this application, the foregoing trained target neural network model may be used to input input data (for example, to-be-processed language information) into the trained target neural network model, to obtain output data (for example, a processing result corresponding to a target task).

A deep learning framework is a computer software system that executes a deep learning network on a specific hardware computing platform, for example, a central processing unit (central processing unit, CPU), a graphics processing unit (graphics processing unit, GPU), or a neural network processing unit (neural network processing unit, NPU). Common deep learning frameworks include TensorFlow, PyTorch, Caffe, and MindSpore. The deep learning framework usually provides a series of software interfaces for users. These software interfaces are defined deep learning network computing units, which are referred to as operators. Users may construct a deep learning network by combining operators, such as a convolutional neural network (convolutional neural network, CNN), a transformer (Transformer), and a recurrent neural network (recurrent neural network, RNN).

The deep learning framework usually supports several different hardware platforms, such as the CPU, the GPU, the NPU, and a TPU. Therefore, in a deep learning network execution process, the operators are also run on these hardware platforms. Generally, a same operator has different performance on different hardware platforms. The performance is mainly reflected by an execution speed.

In recent years, driven by an AI boom, great progress has been made in the deep learning framework technologies. From a perspective of a user, a user-defined deep learning network in a modern deep learning framework is usually executed in the following parts: a user script, a framework operator application programming interface (application programming interface, API), a computational graph, a runtime program, and a hardware platform, for example, the GPU, CPU, and NPU. Specifically, a user may call, by using a script, an operator API provided by the framework to form a deep learning network designed by the user. During execution, the framework first parses the user script, automatically constructs, based on a parsing result, a computational graph including a reverse operation operator, then compiles the computational graph into a runtime program suitable for running on different hardware platforms, and executes the runtime program on a corresponding hardware platform.

In the deep learning technology, a type of operator is referred to as a fully connected layer or a linear layer, and performs the following multiply-add operation: $F(x) = XW + b$, where W is a weight matrix, W is a parameter that needs to be learned, X is an input at the linear layer, and b is a bias value that needs to be learned. This type of operator usually occupies a considerable operation amount in a deep learning network, and is a key to determine whether a deep learning framework can accelerate an operation.

How to accelerate an operation speed of the deep learning network is a hot issue. There are three directions to improve an operation speed of the linear layer: First, the user script is manually modified to seek a faster linear layer configuration, for example, a smaller input X, and smaller learnable parameters W and b. Second, a faster hardware platform is developed, such as a TensorCore computing unit, the TPU, or a dedicated chip NPU. Third, multiplication instructions and an upper-layer runtime program of a corresponding hardware computing unit are optimized, for example, an AVX512 instruction set for the CPU and a CuBLAS linear algebra library. However, how to improve performance when the user modifies a script to a minimum extent without upgrading a hardware resource is a technical problem that needs to be resolved.

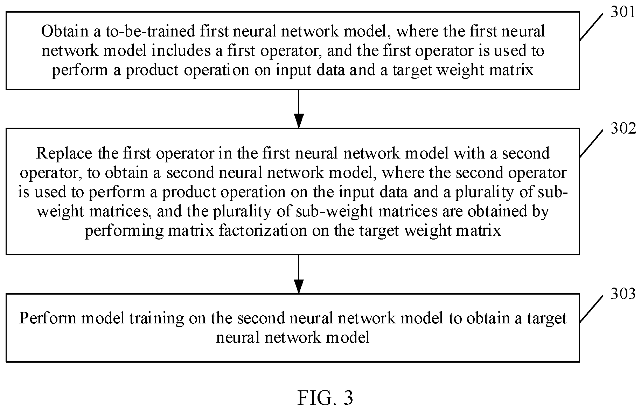

FIG. 3 is a schematic diagram of an embodiment of a model training method according to an embodiment of this application. A data processing method provided in this embodiment of this application is applied to a training device (for example, a server or a terminal device). As shown in FIG. 3, the model training method provided in this embodiment of this application includes the following steps.

301: Obtain a to-be-trained first neural network model, where the first neural network model includes a first operator, and the first operator is used to perform a product operation on input data and a target weight matrix.

In this embodiment of this application, a user may input a script program written in advance. The script program may express a model architecture of the to-be-trained first neural network model, a size of a to-be-trained parameter in the first neural network model, and the like. The script program may include code related to the first operator. The code may specify that an operator type of the first operator is a linear layer, and specify a size of the target weight matrix in the first operator. When training the first neural network model, a training device may call, based on the code related to the first operator, an API related to the linear layer to execute the first operator.

In this embodiment of this application, the first operator may be the linear layer. A linear layer of a framework is an encapsulation of a multiply-add operation, and is usually in a class form. The first operator may be but not limited to Linear or Dense. A mathematical expression of the first operator is usually a multiply-add operation: $F(x) = XW + b$, where W is a weight matrix, W is a parameter that needs to be learned, X is an input at the linear layer, and b is a bias value that needs to be learned. If the mathematical expression of the first operator is $F(x) = XW + b$, W is the target weight matrix, X is input data at the linear layer, and b is a bias value. It should be understood that there may be or may not be the bias value in some scenarios. The first operator is used to perform the product operation on the input data and the target weight matrix. Optionally, the first operator is used to perform the product operation on the input data and the target weight matrix, to obtain a first operation result and perform an addition operation on the first operation result and the bias value. For example, an API of the linear layer may be referred to as Linear, and the API is Linear(in_dim, out_dim, bias = True), where in dim is a dimension of the input data, out_dim is an output dimension, and bias indicates whether the linear layer has a bias value. If the first operator is called by using the foregoing Linear, Linear specifies that the target weight matrix is a parameter matrix whose dimension is (in_dim, out_dim).

In this embodiment of this application, after the user inputs the script program that is written in advance and that relates to the to-be-trained first neural network model, the training device may obtain the to-be-trained first neural network model.

It should be understood that the to-be-trained first neural network model may include a plurality of linear layers, and the first operator is one of the operators.

302: Replace the first operator in the first neural network model with a second operator, to obtain a second neural network model, where the second operator is used to perform a product operation on input data and a plurality of sub-weight matrices, and the plurality of sub-weight matrices are obtained by performing matrix factorization on the target weight matrix.

In this embodiment of this application, after obtaining the script of the first neural network model input by the user, the training device may identify the linear layer in the first neural network model, for example, may identify the linear layer by using an API type called by the script. Descriptions are provided by using an example in which the identified linear layer is the first operator.

In this embodiment of this application, the to-be-trained first neural network model may not be trained based on a specification specified by the user for the first neural network model. The first operator in the first neural network model is first analyzed to determine whether there is a better expression to replace the target weight matrix included in the first operator. The better expression indicates that a first neural network model after the first operator is replaced has a faster training speed (that is, a shorter time period is consumed for processing a same amount of training data) during training.

In this embodiment of this application, if training determines that there is a better expression to replace the target weight matrix included in the first operator, the first operator in the first neural network model may be replaced with the second operator, to obtain the second neural network model. A difference between the second operator and the first operator lies in that the second operator is obtained by replacing the target weight matrix in the first operator with a product of the plurality of sub-weight matrices. The plurality of sub-weight matrices are obtained by performing matrix factorization on the target weight matrix.

The following describes how to perform matrix factorization on the target weight matrix to obtain the plurality of sub-weight matrices.

In this embodiment of this application, matrix factorization splits a matrix into a product of a plurality of matrices. Specifically, the plurality of sub-weight matrices include a matrix 1, a matrix 2, ..., a matrix N-1, and a matrix N. The second operator is used to perform the following operation: M $\times$ matrix 1 $\times$ matrix 2 $\times$ ... $\times$ matrix N-1 $\times$ matrix N, where M represents the input data, and $\times$ represents multiplication. A size of a row in the target weight matrix is the same as a size of a row in the matrix 1, and a size of a column in the target weight matrix is the same as a size of a column in the matrix N. The plurality of sub-weight matrices include a first sub-weight matrix and a second sub-weight matrix. In a process of performing the product operation on the input data and the plurality of sub-weight matrices, the first sub-weight matrix and the second sub-weight matrix are any two matrices that are of the plurality of sub-weight matrices and that are multiplied by each other. A size of a column in the first sub-weight matrix is the same as a size of a row in the second sub-weight matrix. For example, the first sub-weight matrix is the matrix 1, and the second sub-weight matrix is the matrix 2. In this case, a size of a column of the matrix 1 is the same as a size of a row of the matrix 2. For example, the first sub-weight matrix is the matrix N-1, and the second sub-weight matrix is the matrix N. In this case, a size of a column of the matrix N-1 is the same as a size of a row of the matrix N.

It should be understood that the second operator is used to perform the following operation: M $\times$ matrix 1 $\times$ matrix 2 $\times$ ... $\times$ matrix N-1 $\times$ matrix N, where N is a positive integer greater than 1. When N is 2, the second operator is used to perform the following operation: M $\times$ matrix 1 $\times$ matrix 2. When N is 3, the second operator is used to perform the following operation: M $\times$ matrix 1 $\times$ matrix 2 $\times$ matrix 3, and so on.

In this embodiment of this application, a size of a row in each of the plurality of sub-weight matrices is less than or equal to the size of the row in the target weight matrix. A size of a column in each of the plurality of sub-weight matrices is less than or equal to the size of the column in the target weight matrix. For example, if the target weight matrix is 60$\times$60, the size of the row in each sub-weight matrix is less than or equal to 60, and the size of the column in each sub-weight matrix is less than or equal to 60.

For example, if the target weight matrix is 60$\times$60, the first operator may multiply the input data M by the target weight matrix. The plurality of sub-weight matrices include the matrix 1 (whose size is 60$\times$20), the matrix 2 (whose size is 20$\times$40), and the matrix 3 (whose size is 40$\times$60). The second operator may perform the following operation: M $\times$ matrix 1 $\times$ matrix 2 $\times$ matrix 3.

The following describes how the training device determines a size of the sub-weight matrix.

In this embodiment of this application, the training device may obtain a target matrix splitting size. The target matrix splitting size indicates a size of a row and/or a size of a column of each of the plurality of sub-weight matrices. This application does not limit an expression of the target matrix splitting size. The training device may determine the plurality of sub-weight matrices based on the target matrix splitting size and the target weight matrix. Specifically, the target matrix splitting size may include a1, a2, ..., a(n-1), and an. A size of the target weight matrix is P$\times$Q. Correspondingly, sizes of the plurality of sub-weight matrices are P$\times$a1, a1$\times$a2, ..., a(n-1)$\times$an, and an$\times$Q. For example, the target weight matrix is 60$\times$60, and the target matrix splitting size may be expressed as {20, 40}. In this case, the plurality of sub-weight matrices may include the matrix 1 (whose size is 60$\times$20), the matrix 2 (whose size is 20$\times$40), and the matrix 3 (whose size is 40$\times$60).

In this embodiment of this application, the training device may obtain a plurality of candidate matrix splitting sizes, and determine a plurality of groups of candidate sub-weight matrices based on the plurality of candidate matrix splitting sizes and the target weight matrix. Each group of candidate sub-weight matrices is obtained based on one candidate matrix splitting size and the target weight matrix.

The candidate matrix splitting size may be determined based on a size of the target weight matrix. For example, the size of the target weight matrix is P$\times$Q. If a quantity of sub-weight matrices is 2 (including the matrix 1 and the matrix 2), the candidate matrix splitting size may be X, and X is less than P and Q. For example, if the size of the target weight matrix is 60×60, the candidate matrix splitting size X may be a number between 1 and 59. If X is 50, the matrix 1 is 60×50, and the matrix 2 is 50×60. If X is 40, the matrix 1 is 60×40, and the matrix 2 is 40×60. If a quantity of sub-weight matrices is 3 (including the matrix 1, the matrix 2, and the matrix 3), the candidate matrix splitting size may be X and Y, where X is less than P and Q, and Y is less than P and Q. For example, if the size of the target weight matrix is 60×60, the candidate matrix splitting size X may be a number between 1 and 59, and Y may be a number between 1 and 59. If X is 50 and Y is 40, the matrix 1 is 60×50, the matrix 2 is 50×40, and the matrix 3 is 40×60. If X is 40 and Y is 30, the matrix 1 is 60×40, the matrix 2 is 40×30, and the matrix 3 is 30×60.

In this embodiment of this application, the training device may select a plurality of groups of candidate matrix splitting sizes, to obtain a plurality of groups of candidate sub-weight matrices, and then obtain a plurality of candidate neural network models based on the plurality of groups of candidate sub-weight matrices. Each candidate neural network model includes a candidate operator corresponding to the first operator. Each candidate operator includes a group of candidate sub-weight matrices. In other words, each candidate neural network model is obtained by replacing the target weight matrix in the first operator with a product of a corresponding group of candidate sub-weight matrices. In this embodiment, a first candidate matrix splitting size is any candidate matrix splitting size of the plurality of candidate matrix splitting sizes. The first candidate matrix splitting size includes b1, b2, ..., b(n-1), and bn. A size of the target weight matrix is P×Q. Correspondingly, a group of candidate sub-weight matrices corresponding to the first candidate matrix splitting size are P×b1, b1×b2, ..., b(n-1)×bn, and bn×Q.

In this embodiment of this application, the training device may train the plurality of candidate neural network models, and select, from the plurality of candidate neural network models and as the second neural network model, a candidate neural network model that meets a preset condition for data processing precision and that requires a shortest time period to process a same amount of training data during training. The plurality of candidate neural network models are configured to process a target task. The data processing precision indicates precision of processing the target task by the neural network model.

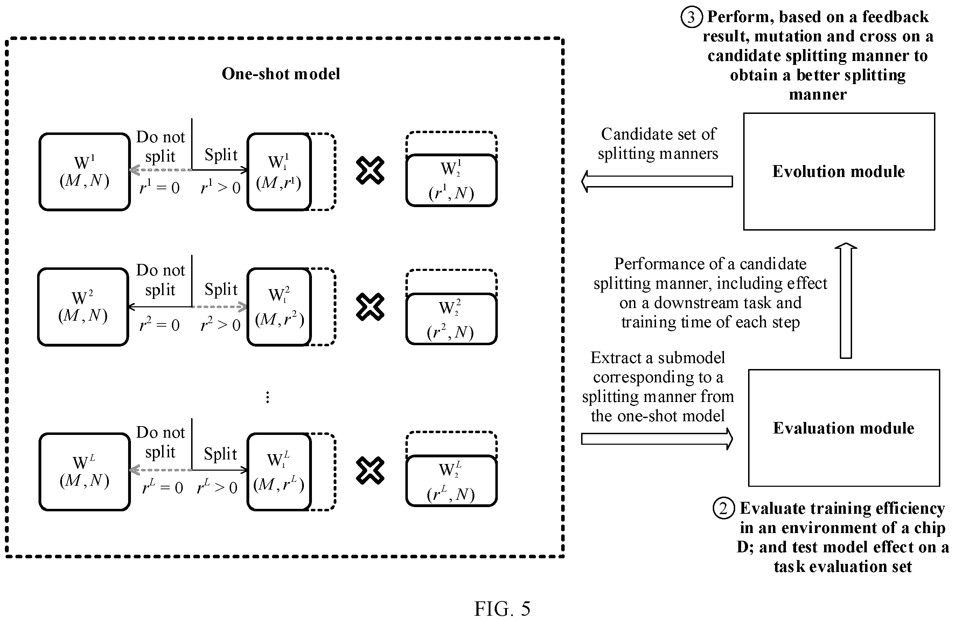

In an implementation, as shown in FIG. 5, the training device may perform model training on a one-shot one-shot model for the to-be-trained first neural network model, to obtain a target one-shot model, where the target one-shot model includes a first weight matrix corresponding to the target weight matrix, and a size of the first weight matrix is the same as that of the target weight matrix; obtain a plurality of candidate matrix splitting sizes; determine a plurality of groups of candidate sub-weight matrices based on the plurality of candidate matrix splitting sizes and the first weight matrix, where each group of candidate sub-weight matrices is obtained based on one candidate matrix splitting size and the first weight matrix; and obtain a plurality of candidate neural network models based on the plurality of groups of candidate sub-weight matrices, where each candidate neural network model includes a candidate operator corresponding to the first operator, and each candidate operator includes a group of candidate sub-weight matrices; and train the plurality of candidate neural network models, and select, from the plurality of candidate neural network models and as the second neural network model, a candidate neural network model that meets a preset condition for data processing precision and that requires a shortest time period to process a same amount of training data during training. The plurality of candidate neural network models are configured to process a target task. The data processing precision indicates precision of processing the target task by the neural network model. In this case, a second candidate matrix splitting size is any candidate matrix splitting size of the plurality of candidate matrix splitting sizes. The second candidate matrix splitting size includes c1, c2, ..., c(n-1), and cn. A size of the first weight matrix is P×Q. Correspondingly, a group of candidate sub-weight matrices corresponding to the second candidate matrix splitting size are P×c1, c1×c2, ..., c(n-1)×cn, and cn×Q.

In this embodiment, if each candidate neural network model is trained, because there are a large quantity of candidate neural network models, a longer time period is consumed. In this embodiment, to enable the training device to automatically search for an optimal matrix splitting manner, the training device may train a one-shot model. The one-shot model (one-shot model) may be obtained in a sampling training manner, and a submodel extracted from the one-shot model has approximate effect to that of a separately trained submodel. Each matrix splitting manner corresponds to a sub-model of the one-shot model. Search based on the one-shot model can achieve an objective of training for a plurality of times, thereby greatly reducing a search time period.

Specifically, parameter specifications in the one-shot model and the first neural network model may be consistent or similar. The one-shot model may include a linear layer corresponding to the first operator. The linear layer that is in the one-shot model and that corresponds to the first operator may include the first weight matrix that has the same size as that of the target weight matrix. During matrix factorization, matrix splitting may be performed based on the first weight matrix in the one-shot model, to obtain a plurality of sub-weight matrices. For example, if a weight matrix in the one-shot model is 60×60, and a candidate matrix splitting size is 50, that is, it is expected that a matrix 1 is 60×50 and a matrix 2 is 50×60, 60 rows and first 50 columns in the first weight matrix in the one-shot model may be split to obtain the matrix 1, and last 50 rows and 60 columns in the first weight matrix in the one-shot model are split to obtain the matrix 2. It should be understood that the first 50 rows and 60 columns in the first weight matrix in the one-shot model may also be split to obtain the matrix 2. In this case, a training manner consistent to that used for training the one-shot model should be specifically used.

Specifically, as shown in FIG. 5, the one-shot model may include L first weight matrices $W = \{W^1, W^2, ..., W^L\}$. FIG. 5 describes an example in which a size of W is M×N. One splitting size r may be sampled for each first weight matrix, where $W^1$ corresponds to $r^1$, $W^2$ corresponds to $r^2$, and so on. When the first weight matrix is split, for example, when $W^1$ is split, M rows and first $r^1$ columns in $W^1$ may be split as a first sub-weight matrix, and last $r^1$ rows and N columns in $W^1$ may be split as a second sub-weight matrix. Weight splitting of other first weight matrices is performed by analogy. Then, model performance evaluation on a hardware platform may be performed in an evaluation module (in FIG. 5, evaluation on a chip D is used as an example).

In this embodiment of this application, the training device may obtain a plurality of candidate neural network models based on the plurality of groups of candidate sub-weight matrices, train the plurality of candidate neural network models, and select, from the plurality of candidate neural network models and as the second neural network model, a candidate neural network model that meets a preset condition for data processing precision and that requires a shortest time period to process a same amount of training data during training. The plurality of candidate neural network models are configured to process a target task. The data processing precision indicates precision of processing the target task by the neural network model.

For determining data processing precision and a time period required for processing a preset quantity of training data during training, the training device should perform evaluation based on a specific hardware environment, to evaluate training efficiency (a time period required for processing the preset quantity of training data during training) of a specific candidate splitting manner in pre-training and precision (data processing precision) of a downstream task. Specifically, for a hardware platform on which a subsequent model needs to be run, after obtaining the plurality of candidate neural network models, the training device may generate a computational graph and a program that is adapted to the hardware platform for each candidate neural network model, and train the candidate neural network model on the hardware platform, to obtain data processing precision of the candidate neural network model and a time period required for processing the preset quantity of training data during training.

It should be understood that the plurality of candidate neural network models may be sequentially determined by the training device during training. In other words, the training device may first determine and train a candidate neural network model, and then determine and train another candidate neural network model. Optionally, after each training, based on a previous training result, a cross and mutation operation may be performed on a candidate splitting manner to obtain a new candidate splitting manner, to determine a candidate neural network model for next training.

For example, a quantity of sub-weight matrices is 2. It is assumed that the first neural network model includes L first weight matrices $W = \{W^1, W^2, ..., W^L\}$, where the matrix $W^l \in \mathbb{R}^{M^l * N^l}$. Each matrix may be split or not split. For a split matrix, in this embodiment, two low-rank sub-weight matrices may be multiplied $W_1^l \times W_2^l$, to replace an original target weight matrix, where $W_1^l \in \mathbb{R}^{M^l * r^l}$, and $W_2^l \in \mathbb{R}^{r^l * N^l}$. Each splitting manner may be expressed as R = $\{r^1, r^2, ..., r^L\}$, where $0 \le r^l \le r^{max}$, 0 indicates that the matrix is not split, that is, the original matrix is used, and $r^{max}$ is a user-defined maximum value. The training device can search for an optimal splitting manner $R^{opt}$ by using an automatic search method. A specific search target may be shown as follows:

$$R^{opt} = argmin_R \; Speed(R); \; Performance(R) \ge Perf,$$

where

*Speed* represents a single-step training time period in a specific hardware environment, or a time period required for processing the preset quantity of training data during training, *Performance* represents evaluation effect of a downstream task, or is referred to as data processing precision, and Perf represents a defined minimum precision requirement.

First, the training device may define $r^{max}$ to determine entire search space $\mathcal{R}: [0, \; r^{max}]^L$. The search space corresponds to $(r^{max} + 1)^L$ candidate splitting manners (0, 1, 2, 3, ..., $r^{max}$). Then, one-shot model training is performed in a sampling manner. In each training step, C split manners are sampled for learning. A one-shot model is obtained after a specific quantity of training steps are performed. Then, H candidate manners may be randomly generated as initial candidate splitting manners $G^0$. A corresponding candidate neural network model is extracted from the one-shot model based on the generated candidate manner $G^{t-1}$. An evaluation module is configured to evaluate effect and performance of these models in parallel (that is, evaluate data processing precision and a time period required for processing the preset quantity of training data during training). The training device may generate a next-generation candidate $G^t$ splitting manner based on an evaluation result by using a mutation and cross evolution algorithm. The training device may select, after a specific quantity of iterations, an optimal splitting manner from a currently evaluated candidate splitting manner set, to determine the second neural network model. Then, the training device may train the second neural network model, to obtain the target neural network model.

It should be understood that the user may also specify sizes of the plurality of sub-weight matrices in a script program. For example, an API of a linear layer may be LinearNew(in_dim, out_dim, bias = True, dim_list), where in_dim is an input dimension, and out_dim is an output dimension. In other words, W is a parameter matrix whose dimension is (in_dim, out_dim), and dim_list specifies sizes of the plurality of sub-weight matrices, for example, if dim list = [a1, a2], LinearNew returns a mathematical description operator: F_new(x) = X $\times$ w1 $\times$ w2 $\times$ w3 + b, where a dimension of w1 is (in_dim, a1), a dimension of w2 is (a1, a2), and a dimension of w3 is (a2, out_dim).

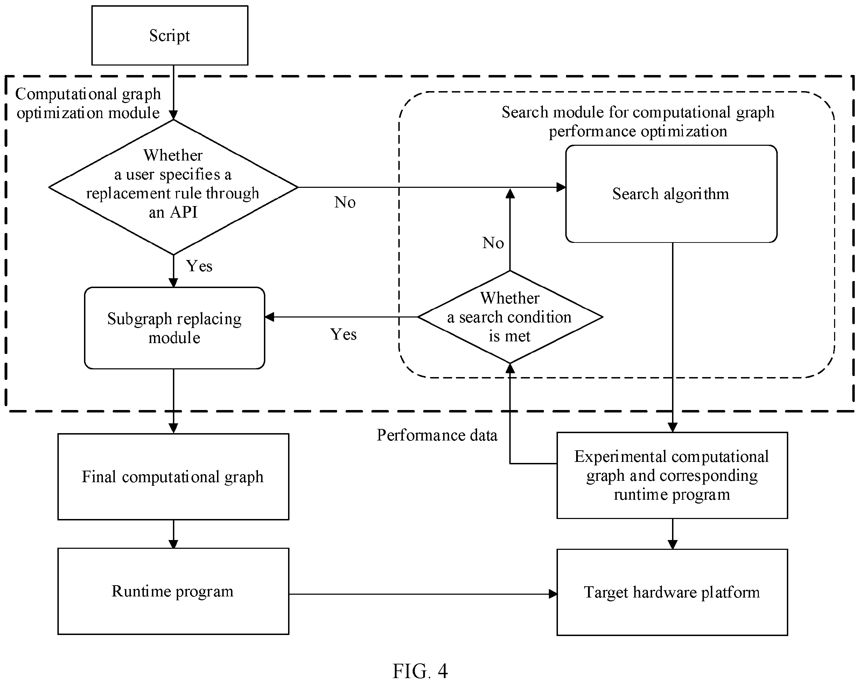

For example, FIG. 4 is a schematic diagram of a model training procedure according to an embodiment of this application. As shown in FIG. 4, a user may input a script program written in advance. The script program may express a model architecture of the to-be-trained first neural network model, a size of a to-be-trained parameter in the first neural network model, and the like. Therefore, a computational graph optimization module in a training device may obtain a script, and determine whether the user specifies a replacement rule (the replacement rule may be a matrix splitting size specified by the user) by using an API. If the user specifies the replacement rule by using the API, a computational graph and a program of a neural network model after replacement are generated, and model training is performed on the target hardware platform based on the computational graph and the program. If the user does not specify the replacement rule by using the API, a search module for computational graph performance optimization may search for a matrix splitting size. Specifically, search may be performed in a manner of determining the target matrix splitting size in step 302 in the embodiment corresponding to FIG. 3. After the search meets a search condition, a computational graph and a program of a neural network model after replacement may be generated, and model training is performed on the target hardware platform based on the computational graph and the program.

303: Perform model training on the second neural network model to obtain a target neural network model.

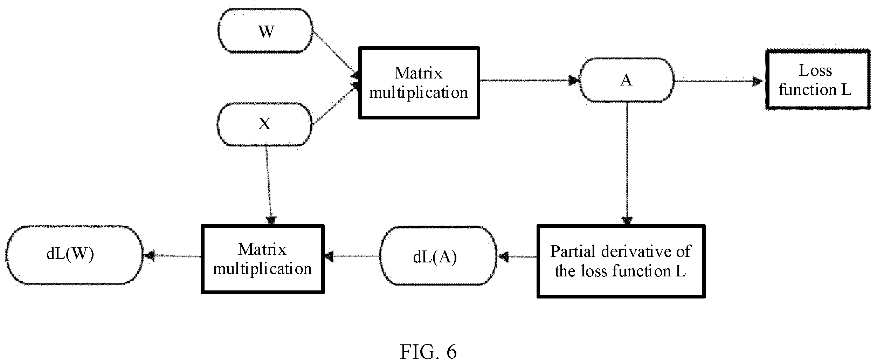

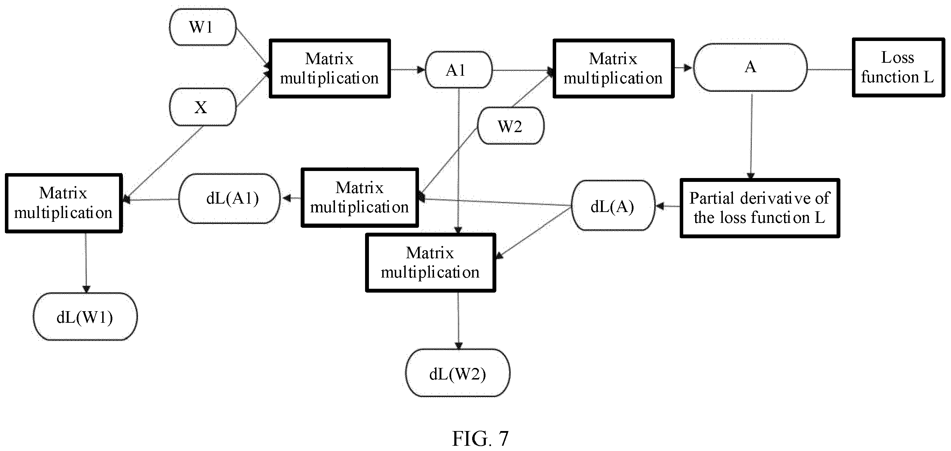

In this embodiment of this application, in a process of performing model training on the second neural network model and evaluating the candidate neural network model, a neural network model needs to calculate a corresponding computational graph. For example, a user defines, in the first neural network model by using an API, a first operator that has only one linear layer and has no bias value b as follows: A = WX. In this case, a computational graph in a deep learning framework may be shown in FIG. 6. If the first operator is replaced with A = W1 $\times$ W2 $\times$ X in the second neural network model or the candidate neural network model, the computational graph is replaced with a computational graph shown in FIG. 7. In the deep learning framework, the computational graph may be automatically generated by an automatic differentiation module. After the computational graph of the second neural network model is obtained, the second neural network model may be trained on a corresponding hardware platform based on the computational graph, to obtain the target neural network model.

In a possible implementation, the training device may further send the target neural network model to a terminal device. In a possible implementation, the target neural network model includes a trained second operator, the trained second operator is used to perform a product operation on the input data and a plurality of trained sub-weight matrices. The training device may further use a product result of the plurality of trained sub-weight matrices as a second weight matrix, to generate a third neural network model, where the third neural network model includes a third operator, and the third operator is used to perform a product operation on the input data and the second weight matrix; and send the third neural network model to the terminal device.

Specifically, a user may select whether to store a weight matrix splitting result. In other words, the user may select whether to use the product result of the plurality of sub-weight matrices as the second weight matrix, to return the third neural network model. If the user selects not to store the weight matrix splitting result, the training device may use the product result of the plurality of trained sub-weight matrices as the second weight matrix, to generate the third neural network model. The third neural network model includes the third operator. The third operator is used to: perform the product operation on the input data and the second weight matrix; and send the third neural network model to the terminal device of the user. If the user selects to store the weight matrix splitting result, the training device may send the target neural network model to the terminal device of the user.

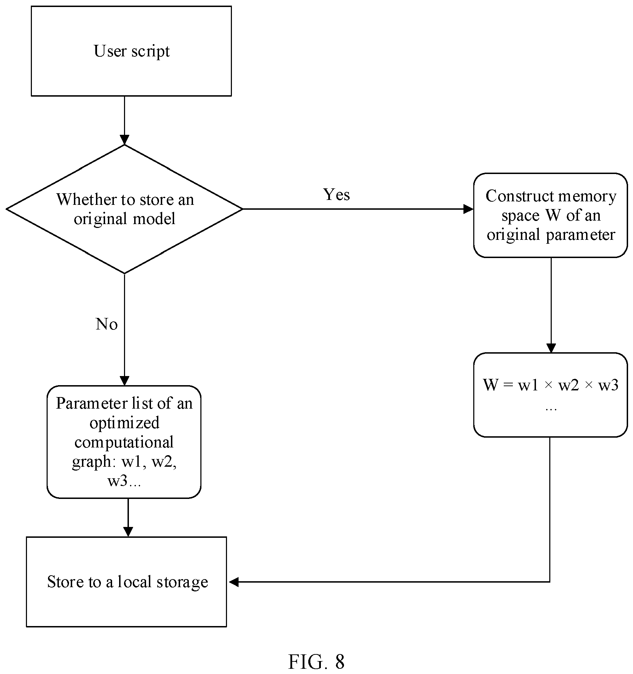

Specifically, as shown in FIG. 8, if the user selects to store an original model (that is, selects not to store a weight matrix splitting result), a product result of the plurality of trained sub-weight matrices is used as a second weight matrix W (W = W1 $\times$ W2 $\times$ W3...), to generate the third neural network model, where the third neural network model includes a third operator, and the third operator is used to perform a product operation on the input data and the second weight matrix; and send the third neural network model to the user, so that the user may store the third neural network model to a local storage. If the user selects not to store the original model (that is, selects to store a weight matrix splitting result), the target neural network model (including the plurality of sub-weight matrices W1 $\times$ W2 $\times$ W3...) may be sent to the user, so that the user may store the target neural network model to a local storage.

In this embodiment of this application, when the same amount of training data is processed, the time period required by the first neural network model is longer than the time period required by the second neural network model.

In other words, when model training is performed on the first neural network model, a time period required by the first neural network model to process a preset quantity of training data is longer than a time period required by the second neural network model to process the preset amount of training data in a process of performing model training on the second neural network model. For a large target weight matrix, the training device requires a long time period to perform the product operation on the input data and the target weight matrix. In this embodiment of this application, the target weight matrix is split into the product of the plurality of sub-weight matrices. Therefore, the training device requires a shorter time period to perform the product operation on the input data and the plurality of sub-weight matrices.

An embodiment of this application provides a model training method, including: obtaining a to-be-trained first neural network model, where the first neural network model includes a first operator, and the first operator is used to perform a product operation on input data and a target weight matrix; replacing the first operator in the first neural network model with a second operator, to obtain a second neural network model, where the second operator is used to perform a product operation on input data and a plurality of sub-weight matrices, and the plurality of sub-weight matrices are obtained by performing matrix factorization on the target weight matrix; and performing model training on the second neural network model to obtain a target neural network model. In the foregoing manner, the target weight matrix is split into a product of the plurality of sub-weight matrices. Therefore, a training device requires a shorter time period to perform the product operation on the input data and the plurality of sub-weight matrices, thereby reducing a model training time period.

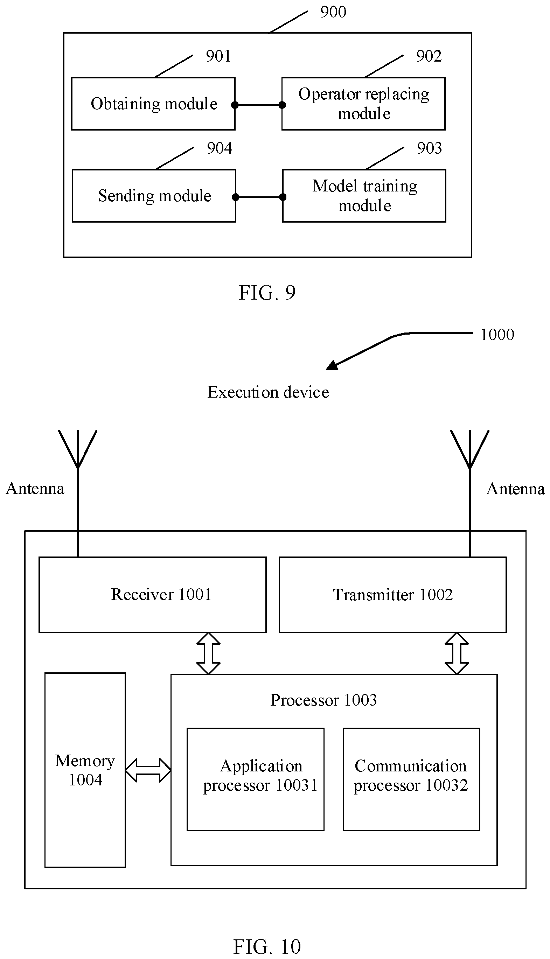

According to the embodiments corresponding to FIG. 1 to FIG. 8, to better implement the foregoing solutions in embodiments of this application, the following further provides related devices configured to implement the foregoing solutions. Specifically, FIG. 9 is a schematic diagram of a structure of a model training apparatus 900 according to an embodiment of this application. The model training apparatus 900 may be a terminal device or a server. The model training apparatus 900 includes:

an obtaining module 901, configured to obtain a to-be-trained first neural network model, where the first neural network model includes a first operator, and the first operator is used to perform a product operation on input data and a target weight matrix;

an operator replacing module 902, configured to replace the first operator in the first neural network model with a second operator, to obtain a second neural network model, where the second operator is used to perform a product operation on input data and a plurality of sub-weight matrices, and the plurality of sub-weight matrices are obtained by performing matrix factorization on the target weight matrix; and

a model training module 903, configured to perform model training on the second neural network model to obtain a target neural network model.

In a possible implementation, when a same amount of training data is processed, a time period required by the first neural network model is longer than a time period required by the second neural network model.

In a possible implementation, the plurality of sub-weight matrices include a first sub-weight matrix and a second sub-weight matrix. In a process of performing the product operation on the input data and the plurality of sub-weight matrices, the first sub-weight matrix and the second sub-weight matrix are any two matrices that are of the plurality of sub-weight matrices and that are multiplied by each other. A size of a column in the first sub-weight matrix is the same as a size of a row in the second sub-weight matrix.

In a possible implementation, the plurality of sub-weight matrices include a matrix 1, a matrix 2, ..., a matrix N-1, and a matrix N. The second operator is used to perform the following operation: M × matrix 1 × matrix 2 × ... × matrix N-1 × matrix N, where M represents the input data, and × represents multiplication.

A size of a row in the target weight matrix is the same as a size of a row in the matrix 1. A size of a column in the target weight matrix is the same as a size of a column in the matrix N.

In a possible implementation, a size of a row in each of the plurality of sub-weight matrices is less than or equal to the size of the row in the target weight matrix. A size of a column in each of the plurality of sub-weight matrices is less than or equal to the size of the column in the target weight matrix.

In a possible implementation, the obtaining module 901 is configured to:

obtain a target matrix splitting size, where the target matrix splitting size indicates a size of a row and/or a size of a column of each of the plurality of sub-weight matrices; and determine the plurality of sub-weight matrices based on the target matrix splitting size and the target weight matrix.

In a possible implementation, the target matrix splitting size includes a1, a2, ..., a(n-1), and an. A size of the target weight matrix is P×Q. Correspondingly, sizes of the plurality of sub-weight matrices are P×a1, a1×a2, ..., a(n-1)×an, and an×Q.

In a possible implementation, the obtaining module 901 is configured to:

obtain a plurality of candidate matrix splitting sizes;

determine a plurality of groups of candidate sub-weight matrices based on the plurality of candidate matrix splitting sizes and the target weight matrix. Each group of candidate sub-weight matrices is obtained based on one candidate matrix splitting size and the target weight matrix.

The operator replacing module is configured to obtain a plurality of candidate neural network models based on the plurality of groups of candidate sub-weight matrices, where each candidate neural network model includes a candidate operator corresponding to the first operator, and each candidate operator includes a group of candidate sub-weight matrices; and

train the plurality of candidate neural network models, and select, from the plurality of candidate neural network models and as the second neural network model, a candidate neural network model that meets a preset condition for data processing precision and that requires a shortest time period to process a same amount of training data during training.

In a possible implementation, the size of the target weight matrix is $P \times Q$. Any candidate matrix splitting size of the plurality of candidate matrix splitting sizes includes b1, b2, ..., b(n-1), and bn. A group of candidate sub-weight matrices corresponding to the any candidate matrix splitting size is $P \times b1$, $b1 \times b2$, ..., $b(n-1) \times bn$, and $bn \times Q$.

In a possible implementation, the obtaining module is configured to:

obtain a plurality of candidate matrix splitting sizes;

perform model training on a one-shot one-shot model for the to-be-trained first neural network model, to obtain a target one-shot model, where the target one-shot model includes a first weight matrix corresponding to the target weight matrix, and a size of the first weight matrix is the same as that of the target weight matrix; and

determine a plurality of groups of candidate sub-weight matrices based on the plurality of candidate matrix splitting sizes and the first weight matrix. Each group of candidate sub-weight matrices is obtained based on one candidate matrix splitting size and the first weight matrix.

The operator replacing module is configured to obtain a plurality of candidate neural network models based on the plurality of groups of candidate sub-weight matrices, where each candidate neural network model includes a candidate operator corresponding to the first operator, and each candidate operator includes a group of candidate sub-weight matrices; and

train the plurality of candidate neural network models, and select, from the plurality of candidate neural network models and as the second neural network model, a candidate neural network model that meets a preset condition for data processing precision and that requires a shortest time period to process a same amount of training data during training.

In a possible implementation, the first operator is further configured to add a result of performing a product operation on the input data and the target weight matrix to a bias value. The second operator is further configured to add a result of performing a product operation on the input data and a product result of the plurality of sub-weight matrices to the bias value.

In a possible implementation, the apparatus further includes:

a sending module 904, configured to send the target neural network model to a terminal device.

In a possible implementation, the target neural network model includes a trained second operator, the trained second operator is used to perform a product operation on the input data and a plurality of trained sub-weight matrices. The apparatus further includes:

a sending module 904, configured to use a product result of the plurality of trained sub-weight matrices as a second weight matrix, to generate a third neural network model, where the third neural network model includes a third operator, and the third operator is used to perform a product operation on the input data and the second weight matrix; and

send the third neural network model to the terminal device.

The following describes an execution device provided in an embodiment of this application. FIG. 10 is a schematic diagram of a structure of an execution device according to an embodiment of this application. The execution device 1000 may be specifically represented as a virtual reality VR device, a mobile phone, a tablet, a notebook computer, an intelligent wearable device, a monitoring data processing device, a server, or the like. This is not limited herein. Specifically, the execution device 1000 includes: a receiver 1001, a transmitter 1002, a processor 1003, and a memory 1004 (there may be one or more processors 1003 in the execution device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected by using a bus or in another manner.

The memory 1004 may include a read-only memory and a random access memory, and provide instructions and data for the processor 1003. Apart of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions to implement various operations.

The processor 1003 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1003, or may be implemented by the processor 1003. The processor 1003 may be an integrated circuit chip, and have a signal processing capability. In an implementation process, steps in the methods can be implemented by using a hardware integrated logical circuit in the processor 1003, or by using instructions in a form of software. The processor 1003 may be a general-purpose processor, a digital signal processor (digital signal processor, DSP), a microprocessor, or a microcontroller. The processor 1003 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 1003 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor 1003.

The receiver 1001 may be configured to receive input digital or character information, and generate a signal input related to setting and function control of the execution device. The transmitter 1002 may be configured to output digital or character information by using a first interface. The transmitter 1002 may further be configured to send instructions to a disk group through the first interface, to modify data in the disk group. The transmitter 1002 may further include a display device such as a display screen.

In embodiments of this application, in one case, the processor 1003 is configured to run the target neural network model obtained through training in FIG. 3.

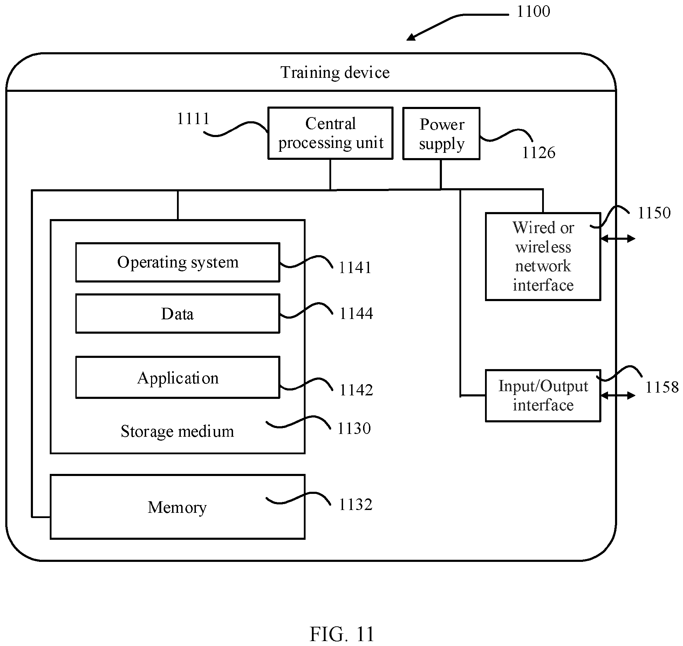

An embodiment of this application further provides a training device. FIG. 11 is a schematic diagram of a structure of a training device according to an embodiment of this application. The model training apparatus described in the embodiment corresponding to FIG. 9 may be deployed on a training device 1100. Specifically, the training device 1100 is implemented by one or more servers. The training device 1100 may vary greatly with configuration or performance, and may include one or more central processing units (central processing unit, CPU) 1111 (for example, one or more processors), a memory 1132, and one or more storage media 1130 (for example, one or more mass storage devices) that store an application program 1142 or data 1144. The memory 1132 and the storage medium 1130 may perform transitory storage or persistent storage. The program stored in the storage medium 1130 may include one or more modules (not shown in the figure), and each module may include a series of instruction operations for the training device. Further, the central processing unit 1111 may be configured to communicate with the storage medium 1130, and perform the series of instruction operations in the storage medium 1130 on the training device 1100.

The training device 1100 may further include one or more power supplies 1126, one or more wired or wireless network interfaces 1150, one or more input/output interfaces 1158, or one or more operating systems 1141, for example, Windows Server™, Mac OS X™, Unix™, Linux™, and FreeBSD™.

In this embodiment of this application, the central processing unit 1111 is configured to perform the model training method performed by the model training apparatus in the embodiment corresponding to FIG. 9.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

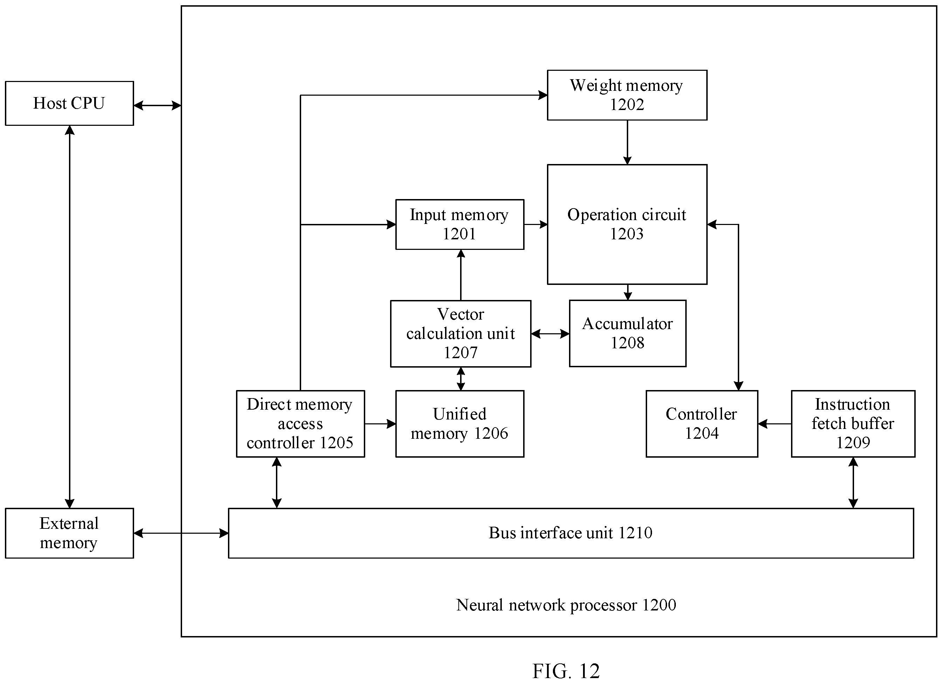

The execution device, the training device, or the terminal device in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the embodiments, or a chip in the training device performs the data processing method described in the embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM). Specifically, FIG. 12 is a schematic diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing engines (processing engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. The weight data is directly transferred to the weight memory 1202 by using a direct memory access controller (direct memory access controller, DMAC) 1205. The input data is also transferred to the unified memory 1206 by using the DMAC.

A BIU is a bus interface unit, namely, a bus interface unit 1210, and is configured to perform interaction between an AXI bus, and the DMAC and an instruction fetch buffer (Instruction Fetch Buffer, IFB) 1209.

The bus interface unit (bus interface unit, BIU) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, or transfer the weight data to the weight memory 1202, or transfer the input data to the input memory 1201.

A vector calculation unit 1207 includes a plurality of operation processing units. If required, further processing is performed on an output of the operation circuit, for example, vector multiplication, vector addition, an exponential operation, a logarithmic operation, or size comparison. The vector calculation unit 1207 is mainly configured to perform network calculation at a non-convolutional/fully connected layer in a neural network, for example, batch normalization (batch normalization), pixel-level summation, and upsampling on a feature plane.

In some implementations, the vector calculation unit 1207 can store a processed output vector in a unified memory 1206. For example, the vector calculation unit 1207 may apply a linear function or a nonlinear function to the output of the operation circuit 1203, for example, perform linear interpolation on a feature plane extracted at a convolutional layer. For another example, the linear function or the nonlinear function is applied to a vector of an accumulated value to generate an activation value. In some implementations, the vector calculation unit 1207 generates a normalized value, a pixel-level summation value, or both. In some implementations, the processed output vector can be used as an activated input to the operation circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application. All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A model training method, wherein the method comprises:

    obtaining a to-be-trained first neural network model, wherein the first neural network model comprises a first operator, and the first operator is used to perform a product operation on input data and a target weight matrix;
    replacing the first operator in the first neural network model with a second operator, to obtain a second neural network model, wherein the second operator is used to perform a product operation on input data and a plurality of sub-weight matrices, and the plurality of sub-weight matrices are obtained by performing matrix factorization on the target weight matrix; and
    performing model training on the second neural network model to obtain a target neural network model.

2. The method according to claim 1, wherein when a same amount of training data is processed, a time period required by the first neural network model is longer than a time period required by the second neural network model.

3. The method according to claim 1 or 2, wherein the plurality of sub-weight matrices comprise a first sub-weight matrix and a second sub-weight matrix, in a process of performing the product operation on the input data and the plurality of sub-weight matrices, the first sub-weight matrix and the second sub-weight matrix are any two matrices that are of the plurality of sub-weight matrices and that are multiplied by each other, and a size of a column in the first sub-weight matrix is the same as a size of a row in the second sub-weight matrix.

4. The method according to claim 3, wherein the plurality of sub-weight matrices comprise a matrix 1, a matrix 2, ..., a matrix N-1, and a matrix N, and the second operator is used to perform the following operation: M $\times$ matrix 1 $\times$ matrix 2 $\times$ ... $\times$ matrix N-1 $\times$ matrix N, wherein M represents the input data, and $\times$ represents multiplication; and a size of a row in the target weight matrix is the same as a size of a row in the matrix 1, and a size of a column in the target weight matrix is the same as a size of a column in the matrix N.

5. The method according to any one of claims 1 to 4, wherein a size of a row in each of the plurality of sub-weight matrices is less than or equal to the size of the row in the target weight matrix, and a size of a column in each of the plurality of sub-weight matrices is less than or equal to the size of the column in the target weight matrix.

6. The method according to any one of claims 1 to 5, wherein the method further comprises:

obtaining a target matrix splitting size, wherein the target matrix splitting size indicates a size of a row and/or a size of a column of each of the plurality of sub-weight matrices; and

determining the plurality of sub-weight matrices based on the target matrix splitting size and the target weight matrix.

7. The method according to claim 6, wherein the target matrix splitting size comprises $a_1$, $a_2$, ..., $a_{n-1}$, and $a_n$, a size of the target weight matrix is P×Q, and correspondingly, sizes of the plurality of sub-weight matrices are P×a1, a1×a2, ..., a(n-1)×an, and an×Q.

8. The method according to claim 6 or 7, wherein the obtaining a target matrix splitting size comprises:

obtaining a plurality of candidate matrix splitting sizes;
the determining the plurality of sub-weight matrices based on the target matrix splitting size and the target weight matrix comprises:

determining a plurality of groups of candidate sub-weight matrices based on the plurality of candidate matrix splitting sizes and the target weight matrix, wherein each group of candidate sub-weight matrices is obtained based on one candidate matrix splitting size and the target weight matrix; and

the replacing the first operator in the first neural network model with a second operator, to obtain a second neural network model comprises:

obtaining a plurality of candidate neural network models based on the plurality of groups of candidate sub-weight matrices, wherein each candidate neural network model comprises a candidate operator corresponding to the first operator, and each candidate operator comprises a group of candidate sub-weight matrices; and

training the plurality of candidate neural network models, and selecting, from the plurality of candidate neural network models and as the second neural network model, a candidate neural network model that meets a preset condition for data processing precision and that requires a shortest time period to process a same amount of training data during training.

9. The method according to claim 8, wherein the size of the target weight matrix is P×Q, any candidate matrix splitting size of the plurality of candidate matrix splitting sizes comprises b1, b2, ..., b(n-1), and bn, and a group of candidate sub-weight matrices corresponding to the any candidate matrix splitting size is P×b1, b1×b2, ..., b(n-1)×bn, and bn×Q.

10. The method according to claim 8 or 9, wherein the obtaining a target matrix splitting size comprises: obtaining the plurality of candidate matrix splitting sizes;

the determining the plurality of sub-weight matrices based on the target matrix splitting size and the target weight matrix comprises:

performing model training on a one-shot (one-shot) model for the to-be-trained first neural network model, to obtain a target one-shot model, wherein the target one-shot model comprises a first weight matrix corresponding to the target weight matrix, and a size of the first weight matrix is the same as that of the target weight matrix; and

determining the plurality of groups of candidate sub-weight matrices based on the plurality of candidate matrix splitting sizes and the first weight matrix, wherein each group of candidate sub-weight matrices is obtained based on one candidate matrix splitting size and the first weight matrix; and

the replacing the first operator in the first neural network model with a second operator, to obtain a second neural network model comprises:

obtaining the plurality of candidate neural network models based on the plurality of groups of candidate sub-weight matrices, wherein each candidate neural network model comprises a candidate operator corresponding to the first operator, and each candidate operator comprises a group of candidate sub-weight matrices; and

training the plurality of candidate neural network models, and selecting, from the plurality of candidate neural network models and as the second neural network model, the candidate neural network model that meets the preset condition for data processing precision and that requires the shortest time period to process the same amount of training data during training.

**11.** The method according to any one of claims 1 to 10, wherein the first operator is further configured to add a result of performing a product operation on the input data and the target weight matrix to a bias value, and the second operator is further configured to add a result of performing a product operation on the input data and a product result of the plurality of sub-weight matrices to the bias value.

**12.** The method according to any one of claims 1 to 11, wherein the method further comprises:
sending the target neural network model to a terminal device.

**13.** The method according to any one of claims 1 to 11, wherein the target neural network model comprises a trained second operator, the trained second operator is used to perform a product operation on the input data and a plurality of trained sub-weight matrices, and the method further comprises:

using a product result of the plurality of trained sub-weight matrices as a second weight matrix, to generate a third neural network model, wherein the third neural network model comprises a third operator, and the third operator is used to perform a product operation on the input data and the second weight matrix; and
sending the third neural network model to the terminal device.

**14.** A model training apparatus, wherein the apparatus comprises:

an obtaining module, configured to obtain a to-be-trained first neural network model, wherein the first neural network model comprises a first operator, and the first operator is used to perform a product operation on input data and a target weight matrix;
an operator replacing module, configured to replace the first operator in the first neural network model with a second operator, to obtain a second neural network model, wherein the second operator is used to perform a product operation on input data and a plurality of sub-weight matrices, and the plurality of sub-weight matrices are obtained by performing matrix factorization on the target weight matrix; and
a model training module, configured to perform model training on the second neural network model to obtain a target neural network model.

**15.** The apparatus according to claim 14, wherein when a same amount of training data is processed, a time period required by the first neural network model is longer than a time period required by the second neural network model.

**16.** The apparatus according to claim 14 or 15, wherein the plurality of sub-weight matrices comprise a first sub-weight matrix and a second sub-weight matrix, in a process of performing the product operation on the input data and the plurality of sub-weight matrices, the first sub-weight matrix and the second sub-weight matrix are any two matrices that are of the plurality of sub-weight matrices and that are multiplied by each other, and a size of a column in the first sub-weight matrix is the same as a size of a row in the second sub-weight matrix.

**17.** The apparatus according to claim 16, wherein the plurality of sub-weight matrices comprise a matrix 1, a matrix 2, ..., a matrix N-1, and a matrix N, and the second operator is used to perform the following operation: M $\times$ matrix 1 $\times$ matrix 2 $\times$ ... $\times$ matrix N-1 $\times$ matrix N, wherein M represents the input data, and $\times$ represents multiplication; and a size of a row in the target weight matrix is the same as a size of a row in the matrix 1, and a size of a column in the target weight matrix is the same as a size of a column in the matrix N.

**18.** The apparatus according to any one of claims 14 to 17, wherein a size of a row in each of the plurality of sub-weight matrices is less than or equal to the size of the row in the target weight matrix, and a size of a column in each of the plurality of sub-weight matrices is less than or equal to the size of the column in the target weight matrix.

**19.** The apparatus according to any one of claims 14 to 18, wherein the obtaining module is configured to:
obtain a target matrix splitting size, wherein the target matrix splitting size indicates a size of a row and/or a size of a column of each of the plurality of sub-weight matrices; and determine the plurality of sub-weight matrices based on the target matrix splitting size and the target weight matrix.

**20.** The apparatus according to claim 19, wherein the target matrix splitting size comprises a1, a2, ..., a(n-1), and an, a size of the target weight matrix is P$\times$Q, and correspondingly, sizes of the plurality of sub-weight matrices are P$\times$a1, a1$\times$a2, ..., a(n-1)$\times$an, and an$\times$Q.

**21.** The apparatus according to claim 19 or 20, wherein the obtaining module is configured to:

obtain a plurality of candidate matrix splitting sizes; and

determine a plurality of groups of candidate sub-weight matrices based on the plurality of candidate matrix splitting sizes and the target weight matrix, wherein each group of candidate sub-weight matrices is obtained based on one candidate matrix splitting size and the target weight matrix; and

the operator replacing module is configured to obtain a plurality of candidate neural network models based on the plurality of groups of candidate sub-weight matrices, wherein each candidate neural network model comprises a candidate operator corresponding to the first operator, and each candidate operator comprises a group of candidate sub-weight matrices; and

train the plurality of candidate neural network models, and select, from the plurality of candidate neural network models and as the second neural network model, a candidate neural network model that meets a preset condition for data processing precision and that requires a shortest time period to process a same amount of training data during training.

22. The apparatus according to claim 21, wherein the size of the target weight matrix is P×Q, any candidate matrix splitting size of the plurality of candidate matrix splitting sizes comprises b1, b2, ..., b(n-1), and bn, and a group of candidate sub-weight matrices corresponding to the any candidate matrix splitting size is P×b1, b1×b2, ..., b(n-1)×bn, and bn×Q.

23. The apparatus according to claim 21 or 22, wherein the obtaining module is configured to:

obtain the plurality of candidate matrix splitting sizes;

perform model training on a one-shot (one-shot) model for the to-be-trained first neural network model, to obtain a target one-shot model, wherein the target one-shot model comprises a first weight matrix corresponding to the target weight matrix, and a size of the first weight matrix is the same as that of the target weight matrix; and

determine the plurality of groups of candidate sub-weight matrices based on the plurality of candidate matrix splitting sizes and the first weight matrix, wherein each group of candidate sub-weight matrices is obtained based on one candidate matrix splitting size and the first weight matrix; and

the operator replacing module is configured to obtain the plurality of candidate neural network models based on the plurality of groups of candidate sub-weight matrices, wherein each candidate neural network model comprises a candidate operator corresponding to the first operator, and each candidate operator comprises a group of candidate sub-weight matrices; and

train the plurality of candidate neural network models, and select, from the plurality of candidate neural network models and as the second neural network model, the candidate neural network model that meets the preset condition for data processing precision and that requires the shortest time period to process the same amount of training data during training.

24. The apparatus according to any one of claims 14 to 23, wherein the first operator is further configured to add a result of performing a product operation on the input data and the target weight matrix to a bias value, and the second operator is further configured to add a result of performing a product operation on the input data and a product result of the plurality of sub-weight matrices to the bias value.

25. The apparatus according to any one of claims 14 to 24, wherein the apparatus further comprises:
a sending module, configured to send the target neural network model to a terminal device.

26. The apparatus according to any one of claims 14 to 24, wherein the target neural network model comprises a trained second operator, the trained second operator is used to perform a product operation on the input data and a plurality of trained sub-weight matrices, and the apparatus further comprises:

a sending module, configured to use a product result of the plurality of trained sub-weight matrices as a second weight matrix, to generate a third neural network model, wherein the third neural network model comprises a third operator, and the third operator is used to perform a product operation on the input data and the second weight matrix; and

send the third neural network model to the terminal device.

27. A model training apparatus, wherein the apparatus comprises a memory and a processor, the memory stores code, and the processor is configured to obtain the code, and performs the method according to any one of claims 1 to 13.

28. A computer storage medium, wherein the computer storage medium stores one or more instructions, and when the instructions are executed by one or more computers, the one or more computers are enabled to perform the method according to any one of claims 1 to 13.

EP 4 206 957 A1

Intelligent information chain

Smart product and industry application

| Translation/ Text analysis/... | Voice/Visual/ Image/... |

Data

Data processing:

| Data training/Machine learning/Deep learning | Search/Inference/ Decision-making | ... |

| Infrastructure | Sensor | Smart chip | Basic platform | ... |

IT value chain

FIG. 1

200

Data collection device 260

Data flow

Database 230

Training device 220

Execution device 210

I/O interface 212

Target model/rule 201

Computing module 211

Associated function module 213

Associated function module 214

Data storage system 250

Input data

Output result

Client device 240

Data flow

FIG. 2

Obtain a to-be-trained first neural network model, where the first neural network model includes a first operator, and the first operator is used to perform a product operation on input data and a target weight matrix

/ 301

↓

Replace the first operator in the first neural network model with a second operator, to obtain a second neural network model, where the second operator is used to perform a product operation on the input data and a plurality of sub-weight matrices, and the plurality of sub-weight matrices are obtained by performing matrix factorization on the target weight matrix

/ 302

↓

Perform model training on the second neural network model to obtain a target neural network model

/ 303

FIG. 3

FIG. 4

FIG. 5

Loss function L

A

Partial derivative of the loss function L

Matrix multiplication

dL(A)

W

X

Matrix multiplication

dL(W)

FIG. 6

FIG. 7

FIG. 8

900

Obtaining module 901

Operator replacing module 902

Sending module 904

Model training module 903

FIG. 9

1000

Execution device

Antenna

Antenna

Receiver 1001

Transmitter 1002

Processor 1003

Memory 1004

Application processor 10031

Communication processor 10032

FIG. 10

FIG. 11

EP 4 206 957 A1

FIG. 12

## INTERNATIONAL SEARCH REPORT

International application No.

**PCT/CN2021/119274**

### A. CLASSIFICATION OF SUBJECT MATTER

G06F 17/16(2006.01)i

According to International Patent Classification (IPC) or to both national classification and IPC

### B. FIELDS SEARCHED

Minimum documentation searched (classification system followed by classification symbols)

G06F, G06N

Documentation searched other than minimum documentation to the extent that such documents are included in the fields searched

Electronic data base consulted during the international search (name of data base and, where practicable, search terms used)

WPI, EPODOC, BAIDU, CNPAT, CNKI, IEEE: 模型, 训练, 神经网络, 矩阵, 分解, 拆分, 乘, 替换, 时间, model, train, neural network, matrix, decomposition, product, replace, time

### C. DOCUMENTS CONSIDERED TO BE RELEVANT

| Category* | Citation of document, with indication, where appropriate, of the relevant passages | Relevant to claim No. |
|---|---|---|
| PX | CN 112541159 A (HUAWEI TECHNOLOGIES CO., LTD.) 23 March 2021 (2021-03-23) claims 1-28 | 1-28 |
| X | CN 108629412 A (INSTITUTE OF ACOUSTICS, CHINESE ACADEMY OF SCIENCES et al.) 09 October 2018 (2018-10-09) description, paragraphs [0022]-[0035] | 1-7, 11-20, 24-28 |
| Y | CN 108629412 A (INSTITUTE OF ACOUSTICS, CHINESE ACADEMY OF SCIENCES et al.) 09 October 2018 (2018-10-09) description, paragraphs [0022]-[0035] | 8-10, 21-23 |
| Y | CN 110263913 A (SHENZHEN INSTITUTES OF ADVANCED TECHNOLOGY, CHINESE ACADEMY OF SCIENCES) 20 September 2019 (2019-09-20) description, paragraphs [0057]-[0132] | 8-10, 21-23 |
| X | CN 110751265 A (SHENZHEN INSTITUTES OF ADVANCED TECHNOLOGY, CHINESE ACADEMY OF SCIENCES) 04 February 2020 (2020-02-04) description, paragraphs [0046]-[0109] | 1-4, 6-7, 11-17, 19-20, 24-28 |
| A | CN 107944556 A (UNIVERSITY OF ELECTRONIC SCIENCE AND TECHNOLOGY OF CHINA) 20 April 2018 (2018-04-20) entire document | 1-28 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 December 2021** | **17 December 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/119274** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2018260703 A1 (MASSACHUSETTS INSTITUTE OF TECHNOLOGY) 13 September 2018 (2018-09-13) entire document | 1-28 |

Form PCT/ISA/210 (second sheet) (January 2015)

**INTERNATIONAL SEARCH REPORT**
Information on patent family members

International application No.

**PCT/CN2021/119274**

| Patent document cited in search report | | | Publication date (day/month/year) | Patent family member(s) | | | Publication date (day/month/year) |
|---|---|---|---|---|---|---|---|
| CN | 112541159 | A | 23 March 2021 | None | | | |
| CN | 108629412 | A | 09 October 2018 | None | | | |
| CN | 110263913 | A | 20 September 2019 | WO | 2020233130 | A1 | 26 November 2020 |
| CN | 110751265 | A | 04 February 2020 | None | | | |
| CN | 107944556 | A | 20 April 2018 | CN | 107944556 | B | 08 September 2020 |
| US | 2018260703 | A1 | 13 September 2018 | WO | 2018098230 | A1 | 31 May 2018 |

Form PCT/ISA/210 (patent family annex) (January 2015)

**REFERENCES CITED IN THE DESCRIPTION**

**Patent documents cited in the description**

- CN 202011063706